# FASCICULE DE BREVET EUROPEEN

(11) **EP 2 514 082 B1**
(45) Date de publication et mention de la délivrance du brevet: **09.08.2017**
(21) Numéro de dépôt: 10803564.3
(22) Date de dépôt: 16.12.2010
(51) Int. Cl.: H02M 1/32, H02P 29/02

(54) **PROCEDE DE DETECTION DE PANNE D'UNE SOURCE DE COURANT A DECOUPAGE ET SOURCE DE PUISSANCE CORRESPONDANTE**
VERFAHREN ZUR ERKENNUNG EINES AUSFALLS BEI EINER SCHALTSTROMQUELLE UND ZUGEHÖRIGE STROMQUELLE
METHOD FOR DETECTING A BREAKDOWN IN A SWITCHING CURRENT SOURCE AND CORRESPONDING POWER SOURCE

(30) Priorité: 17.12.2009 FR 0959099
(43) Date de publication de la demande: 24.10.2012
(73) Titulaire: Safran Electronics & Defense, 92100 Boulogne-Billancourt (FR)
(72) Inventeur: TRUONG, Thanh-Tuan, 92100 Boulogne-Billancourt (FR); GENESTE, Nicolas, 92100 Boulogne-Billancourt (FR); ESTEVE, Gwenaël, 92100 Boulogne-Billancourt (FR)
(74) Mandataire: Lavialle, Bruno François Stéphane
(86) Numéro de dépôt international: PCT/EP2010/007649
(87) Numéro de publication internationale: WO 2011/072843

(56) Documents cités:
- US-A- 4 288 831
- US-A- 5 416 689
- US-A1- 2004 145 923
- US-A1- 2007 217 095

## Description

La présente invention concerne un procédé de détection de panne d'une source de courant à découpage et une source de courant correspondante.

L'invention est applicable à différents types de dispositifs et, notamment, aux dispositifs de pilotage (ou « drivers ») des actionneurs de type moteur couple ou solénoïde, la régulation des machines tournantes, les alimentations à découpage...

Ces dispositifs utilisent généralement une source de courant mettant en oeuvre une commande de type à modulation de largeur d'impulsion ou MLI, plus connue sous l'abréviation PWM (de l'anglais « Pulse Width Modulation »).

La source de courant comprend un étage de commande et un étage de puissance. L'étage de commande reçoit un signal de consigne et fournit, à l'étage de puissance, un signal de commande modulé selon un rapport cyclique prédéterminé. L'étage de puissance est relié à une charge à laquelle l'étage de puissance fournit un courant correspondant au signal de commande. A cette fin, l'étage de puissance comprend par exemple au moins un transistor de découpage piloté par le signal de commande.

Dans certaines applications, où une défaillance du dispositif de commande pourrait avoir des conséquences considérées comme critiques, l'une des préoccupations principales est la détection des pannes et, de préférence, l'identification des composants défaillants.

Il est ainsi connu de réaliser une détection de panne en effectuant une mesure de tension et de courant au point chaud en sortie de l'étage de puissance et une mesure de courant au point froid en sortie de l'étage de puissance. Ceci permet de détecter un court-circuit dans la charge (les courants mesurés sont égaux au courant de consigne et la tension est nulle), un circuit ouvert dans la charge (les courants mesurés sont nuls alors que la tension n'est pas nulle) et une défaillance de la source de courant (les courants et la tension mesurés sont nuls alors que le signal de consigne ne correspond pas à un courant nul). Ceci nécessite une logique de détection de panne relativement complexe dont la mise en oeuvre est relativement coûteuse.

Le document US2004/0145923 décrit un procédé selon le préambule de la revendication 1. Un but de l'invention est de fournir un moyen simple permettant de détecter et d'identifier des défaillances lors de l'alimentation d'une charge par une telle source de courant à découpage.

A cet effet, on prévoit, selon l'invention, un procédé de détection de panne d'une source de courant à découpage comportant un étage de commande fournissant, en fonction d'un signal de consigne, un signal de commande modulé selon un rapport cyclique prédéterminé à un étage de puissance destiné à fournir un courant à une charge. Le procédé comprend les étapes de :
- déterminer au moins une valeur nominale du rapport cyclique pour un fonctionnement normal et au moins un seuil de panne en fonction de la valeur nominale,
- déterminer au moins une valeur instantanée du rapport cyclique du signal modulé émis par l'étage de commande,
- comparer la valeur instantanée au seuil de panne.

La détection de panne est réalisée en utilisant le rapport cyclique qui est une grandeur représentative de la puissance fournie à la charge par la source de courant. La comparaison du rapport cyclique instantané à un seuil déterminé en relation avec un rapport cyclique nominal (mesuré préalablement en conditions nominales de fonctionnement, ou bien calculé ou prédit à partir d'un modèle) permet de révéler l'existence d'un court-circuit ou d'un circuit ouvert dans la charge.

Avantageusement, une plage de valeurs nominales est déterminée.

Ceci est avantageux lorsque le fonctionnement de la charge est susceptible d'entraîner une variation du courant. Le procédé comprend l'étape de mesurer le courant en sortie de l'étage de puissance et de vérifier si :
- le courant est nul, et le cas échéant,
- le signal de consigne correspond à un courant nul.

La détection du courant permet d'identifier un dysfonctionnement de la source de courant elle-même.

L'invention a également pour objet une source de courant à découpage, comportant un étage de commande, un étage de puissance, et un module de détection de panne agencé pour mettre en oeuvre le procédé de l'invention.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 représente schématiquement une source de courant conforme à un premier mode de réalisation de l'invention,
- la figure 2 est une vue analogue à la figure 1 d'une source de courant conforme à un deuxième mode de réalisation de l'invention.

En référence aux figures, l'invention concerne une source de courant à découpage destinée à être reliée à une charge 100 pour alimenter celle-ci. La charge 100 peut être notamment une machine tournante, ou un actionneur de type moteur couple ou solénoïde.

La source de courant, généralement désignée en 1, comporte un étage de commande 2, un étage de puissance 3, et un module de détection de panne 4 relié à une branche 5 de mesure de courant entre l'étage de puissance 3 et la charge 100.

L'étage de commande 2 est agencé pour fournir de façon connue en elle-même à l'étage de puissance 3 un signal de commande modulé selon un rapport cyclique prédéterminé en fonction d'un signal de consigne.

L'étage de puissance 3 comprend de manière connue en elle-même des transistors ayant une entrée de commande recevant le signal de commande pour piloter les transistors dans leur état de conduction et leur état de blocage en fonction du rapport cyclique. Le courant passant dans les transistors est transmis à la charge 100.

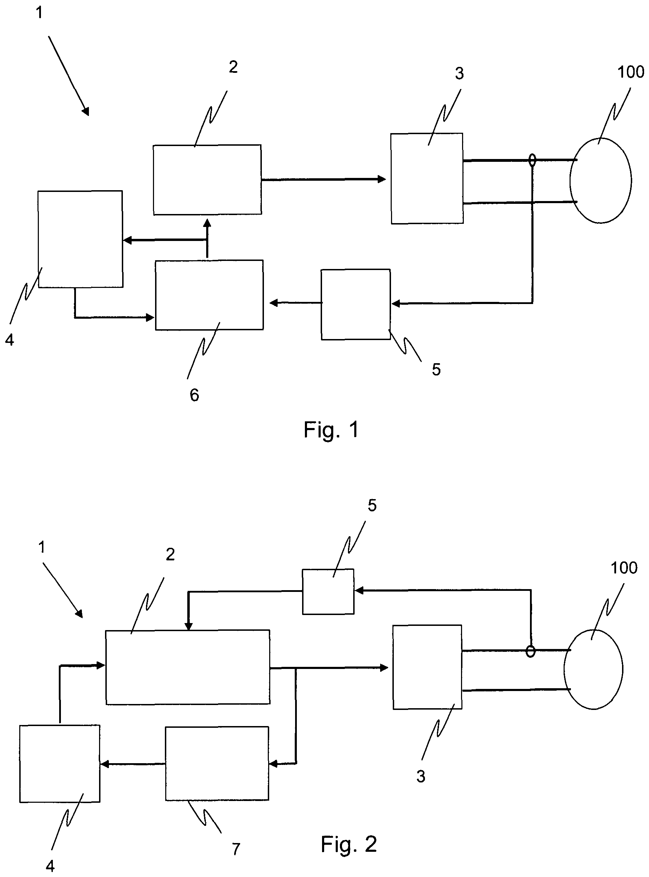

Dans le mode de réalisation de la figure 1, l'étage de commande 2 est de type numérique et comporte une unité 6 de calcul du rapport cyclique qui est reliée au module de détection 4 pour fournir à ce dernier la valeur instantanée du rapport cyclique.

Dans le mode de réalisation de la figure 2, l'étage de commande 2 est un régulateur de type analogique et le module de détection 4 est relié à un organe 7 de détection du signal de commande en sortie de l'étage de commande 2 et de mesure du rapport cyclique.

Dans les deux modes de réalisation, le module de détection 4 est agencé pour mettre en oeuvre un procédé de détection de panne.

Ce procédé comprend les étapes de :
- déterminer au moins une valeur nominale du rapport cyclique pour un fonctionnement normal de la charge 100 et au moins un seuil de panne en fonction de la valeur nominale,
- déterminer au moins une valeur instantanée α du rapport cyclique du signal modulé émis par l'étage de commande 2,
- comparer la valeur instantanée au seuil de panne.

Plus précisément, une plage de valeurs nominales est déterminée, à savoir une valeur minimale correspondant au courant minimal et une valeur maximale αmax correspondant au courant maximal respectivement reçus par la charge 100 en fonctionnement normal. Les valeurs minimale αmin et maximale αmax peuvent être déterminées da façon théorique, par calcul, ou de façon empirique, par des mesures réalisées alors que la charge est en fonctionnement dans des conditions contrôlées pour entraîner un fonctionnement normal. Deux seuils de pannes sont déterminés à partir de ces valeurs : un seuil de détection de circuit ouvert αco supérieur à la valeur maximale αmax et un seuil de détection de court-circuit αcc inférieur à la valeur minimale αmin. La mesure dans laquelle les seuils αco et αcc sont respectivement supérieur à la valeur maximale αmax et inférieur à la valeur minimale αmin est déterminée de manière à éviter une fausse détection en raison d'une variation exceptionnelle et brève du courant lors du fonctionnement normal de la charge 100 par exemple en raison d'un transitoire entre deux états de la charge. Le seuil de circuit ouvert αco est par exemple ici supérieur de 20 % à la valeur maximale αmax et le seuil de court-circuit αcc est par exemple ici inférieur de 20 % à la valeur minimale αmin.

Le procédé comprend en outre l'étape de mesurer le courant I au point chaud (courant Ic) et/ou au point froid (courant If) en sortie de l'étage de puissance 3 via la branche 5 et de vérifier si :
- le courant est nul, et le cas échéant,
- le signal de consigne correspond à un courant nul.

Ceci permet de détecter des pannes de la source de courant.

Le tableau ci-dessous résume les différents cas de panne.

| | **Conditions de détection de panne** | | | |
|---|---|---|---|---|
| **Pannes identifiables** | **Mesure Ic** | **Mesure If** | **α** | **Consigne** |
| **Charge en court-circuit** | | | **< αcc** | |
| **Charge en circuit ouvert** | | | **> αco** | |
| **Panne DRIVER** | = 0 | = 0 | = 0 | ≠ 0 |

Bien entendu, l'invention n'est pas limitée aux modes de réalisation décrits mais englobe toute variante entrant dans le champ de l'invention telle que définie par les revendications.

En particulier, la source de courant peut avoir une structure différente de celle décrite tant que ladite structure permet la mise en oeuvre du procédé de l'invention.

Il est possible de détecter une pluralité de valeurs instantanées du rapport cyclique, par exemple sur une période donnée.

## Revendications

1. Procédé de détection de panne d'une source de courant à découpage (1) comportant un étage de commande (2) fournissant, en fonction d'un signal de consigne, un signal de commande modulé selon un rapport cyclique (α) prédéterminé à un étage de puissance (3) destiné à fournir un courant à une charge (100), le procédé comprenant les étapes de :
- déterminer au moins une valeur nominale (αmin, αmax) du rapport cyclique pour un fonctionnement normal et au moins un seuil de panne (αcc, αco) en fonction de la valeur nominale,
- déterminer au moins une valeur instantanée (α) du rapport cyclique du signal modulé émis par l'étage de commande,
- comparer la valeur instantanée au seuil de panne ; **caractérisé par**
- mesurer du courant en sortie de l'étage de puissance ;
- vérifier si le courant (Ic) est nul, et le cas échéant, si le signal de consigne correspond à un courant nul.

2. Procédé selon la revendication 1, dans lequel une plage de valeurs nominales (αmin, αmax) est déterminée.

3. Source de courant à découpage (1), comportant un étage de commande (2), un étage de puissance (3), et un module de détection de panne (4) agencé pour mettre en oeuvre un procédé conforme à l'une quelconque des revendications précédentes, ce module de détection (4) étant relié à une branche (5) de mesure de courant entre l'étage de puissance (3) et la charge (100).

4. Source selon la revendication 3, dans lequel l'étage de commande (3) est de type numérique et comporte une unité de calcul du rapport cyclique (6) qui est reliée au module de détection (4) pour fournir à ce dernier la valeur instantanée du rapport cyclique.

5. Source selon la revendication 3, dans lequel l'étage de commande (2) est de type analogique et le module de détection est relié à un organe (7) de détection du signal de commande et de mesure du rapport cyclique.

## Patentansprüche

1. Verfahren zur Erkennung eines Ausfalls einer Schaltstromquelle (1), die eine Steuerstufe (2) umfasst, die in Abhängigkeit von einem Sollwertsignal ein Steuersignal liefert, das gemäß einem vorgegebenen Tastverhältnis (α) auf eine Leistungsstufe (3) moduliert wird, die dazu bestimmt ist, einen Strom an eine Last (100) zu liefern;
wobei das Verfahren die Schritte umfasst:
- Bestimmen mindestens eines nominalen Wertes (αmin, αmax) des Tastverhältnisses für einen normalen Betrieb und mindestens eines Ausfallschwellwertes (αcc, αco) in Abhängigkeit des nominalen Wertes,
- Bestimmen mindestens eines Momentanwertes (α) des Tastverhältnisses des modulierten Signals, das von der Steuerstufe ausgesandt wird,
- Vergleichen des Momentanwertes mit dem Ausfallschwellwert;
**gekennzeichnet durch**
- Messen des Stroms am Ausgang der Leistungsstufe;
- Verifizieren, ob der Strom (Ic) Null ist und gegebenenfalls ob das Sollwertsignal einem Nullstrom entspricht.

2. Verfahren nach Anspruch 1, bei dem ein Bereich von nominalen Werten (αmin, αmax) bestimmt wird.

3. Schaltstromquelle (1), umfassend eine Steuerstufe (2), eine Leistungsstufe (3) und ein Ausfallerkennungsmodul (4), das so ausgebildet ist, dass es ein Verfahren nach einem der vorhergehenden Ansprüche einsetzt, wobei dieses Erkennungsmodul (4) mit einem Zweig (5) zum Messen des Stromes zwischen der Leistungsstufe (3) und der Last (100) verbunden ist.

4. Quelle nach Anspruch 3, bei der die Steuerstufe (3) digitaler Art ist und eine Einheit zum Berechnen des Tastverhältnisses (6) umfasst, die mit dem Erkennungsmodul (4) verbunden ist, um diesem den Momentanwert des Tastverhältnisses zu liefern.

5. Quelle nach Anspruch 3, bei dem die Steuerstufe (2) analoger Art ist und das Erkennungsmodul mit einem Organ (7) zum Erfassen des Steuersignals und zum Messen des Tastverhältnisses verbunden ist.

## Claims

1. A method of detecting a fault of a switching electricity source (1) having a control stage (2) responsive to a setpoint signal to deliver a control signal that is modulated with a predetermined duty ratio (α) to a power stage (3) that is to deliver electricity to a load (100), comprising the steps of:
. determining at least one nominal value (αₘᵢₙ, αₘₐₓ) for the duty ratio for normal operation, and at least one fault threshold (α_{sc}, α_{oc}) as a function of the nominal value;
. determining at least one instantaneous value (α) of the duty ratio of the signal issued by the control stage;
. comparing the instantaneous value with the fault threshold;
**characterized by**
. measuring the current output by the power stage;
. verifying whether the current (Iₕ) is zero, and where appropriate, the setpoint signal corresponds to a zero current.

2. A method according to claim 1, wherein a range of nominal values (αₘᵢₙ, αₘₐₓ) is determined.

3. A switching electricity source (1) comprising a control stage (2), a power stage (3), and a fault detection module (4) arranged to implement a method according to any preceding claim, wherein the detection module (4) is connected to a branch (5) for measuring current between the power stage (3) and the load (100).

4. A source according to claim 3, wherein the control stage (3) is of the digital type and comprises a unit (6) for calculating the duty ratio, which unit is connected to the detection module (4) in order to provide it with the instantaneous value of the duty ratio.

5. A source according to claim 3, wherein the control stage (2) is of the analog type and the detection module is connected to a member (7) for detecting the control signal and for measuring the duty ratio.
